# EUROPEAN PATENT APPLICATION

(11) **EP 2 890 050 A1**
(43) Date of publication of application: **01.07.2015**
(21) Application number: 13866263.0
(22) Date of filing: 17.12.2013
(51) Int. Cl.: H04L 9/32

(54) **ELECTRONIC DEVICE AND PASSWORD AUTHENTICATION METHOD THEREFOR**

(30) Priority: 19.12.2012 CN 201210555543
(71) Applicant: Tendyron Corporation, Beijing 100083 (CN)
(72) Inventor: LI, Dongsheng, Beijing 100083 (CN)
(74) Representative: Pizzoli, Antonio
(86) International application number: PCT/CN2013/089662
(87) International publication number: WO 2014/094594

(57) **Abstract**

Proposed are an electronic device and a password authentication method therefor. The password authentication method comprises the following steps: an electronic device receiving an entered password of which the length is n-bit character strings, the n being equal to or greater than 1; the electronic device performing bit-by-bit comparison or random comparison on each character of the entered password and a pre-stored correct password; and the electronic device returning a comparison result in preset feedback time or random feedback time, wherein neither the preset feedback time nor the random feedback time is less than the time needed for comparing the n-bit character strings of the entered password. According to the password authentication method for an electronic device in the embodiments of the present invention, regardless of the comparison result, the electronic device returns the result of password authentication in the preset feedback time or the random feedback time, so that lawbreakers on the network cannot calculate a complete and correct password according to the rule of feedback time, and the security of the password of the electronic device is improved, thereby improving the security of user accounts.

## Description

### FIELD

The present disclosure relates to a field of information security, and more particularly relates to a password authentication method for an electronic device and an electronic device.

### BACKGROUND

When an electronic device (such as a USB key, a smart card) with a calculation function and a function of storing data and rewriting data is used, an input password is required to activate the electronic device.

The existing USB key or smart card authenticates the password bit by bit sequentially and isochronously. That is, the input password is compared with a correct password bit by bit in sequence, an error message is provided once a bit of the input password is incorrect. For example, assuming that the correct password is "123456" and a time required to authenticate each bit of the input password is 0.1ms, if the input password is "120000", the error message is provided by the USB key or the smart card at 0.3ms; if the input password is "123000", the error message is provided by the USB key or the smart card at 0.4ms.

Problems in the related art are that, a criminal may determine which bits of the input password are correct according to a feedback time of the error message, and then may obtain the entire correct password through many times of calculation, such that the entire correct password of the electronic device is disclosed, thus bringing about an insecurity of user accounts.

### SUMMARY

The present disclosure seeks to solve at least one of the above problems.

Accordingly, a first objective of the present disclosure is to provide a password authentication method for an electronic device. The password authentication method for an electronic device comprises: receiving by the electronic device an input password, in which the input password is an n-bit character string and n≥1; comparing by the electronic device characters of the input password with corresponding characters of a pre-stored password bit by bit in sequence or randomly; and providing by the electronic device a comparison result at a predetermined feedback time or a random feedback time, in which each of the predetermined feedback time and the random feedback time is not less than a total time required to compare the n-bit character string of the input password.

With the password authentication method for an electronic device according to embodiments of the present disclosure, a comparison result of a password authentication may be provided by the electronic device at a predetermined feedback time or a random feedback time, whatever the comparison result is. In this way, an online criminal cannot obtain an entire correct password through many times of calculation according to a rule of feedback time, such that the security of the password of the electronic device is enhanced, thus enhancing the security of user accounts.

A second objective of the present disclosure is to provide a password authentication method for an electronic device. The password authentication method for an electronic device comprises: receiving by the electronic device an input password, in which the input password is an n-bit character string and n≥1; comparing by the electronic device characters of the input password with corresponding characters of a pre-stored password bit by bit randomly; and providing a result indicating the input password is incorrect once it is judged by the electronic device that a character of the input password is inconsistent with the pre-stored password.

With the password authentication method for an electronic device according to embodiments of the present disclosure, characters of a received password are compared by the electronic device randomly instead of orderly. In this way, an online criminal cannot obtain an entire correct password through many times of calculation according to a rule of feedback time, such that the security of the password of the electronic device is enhanced, thus enhancing the security of user accounts.

A third objective of the present disclosure is to provide an electronic device. The electronic device comprises: a receiving module, configured to receive an input password, in which the input password is an n-bit character string and n≥1; an authenticating module, configured to compare characters of the input password with corresponding characters of a pre-stored password bit by bit in sequence or randomly; and a control module, configured to output a comparison result at a predetermined feedback time or a random feedback time after the comparison result is obtained by the authenticating module, in which each of the predetermined feedback time and the random feedback time is not less than a total time required to compare the n-bit character string of the input password.

With the electronic device according to embodiments of the present disclosure, a comparison result of a password authentication may be provided by the electronic device at a predetermined feedback time or a random feedback time, whatever the comparison result is. In this way, an online criminal cannot obtain an entire correct password through many times of calculation according to a rule of feedback time, such that the security of the password of the electronic device is enhanced, thus enhancing the security of user accounts.

A fourth objective of the present disclosure is to provide an electronic device. The electronic device comprises: a receiving module, configured to receive an input password, in which the input password is an n-bit character string and n≥1; an authenticating module, configured to compare characters of the input password with corresponding characters of a pre-stored password bit by bit randomly; and a control module, configured to output a result indicating the input password is incorrect once it is judged by the authenticating module that a character of the input password is inconsistent with the pre-stored password.

With the electronic device according to embodiments of the present disclosure, characters of a received password are compared by the electronic device randomly instead of orderly. In this way, an online criminal cannot obtain an entire correct password through many times of calculation according to a rule of feedback time, such that the security of the password of the electronic device is enhanced, thus enhancing the security of user accounts.

Additional aspects and advantages of embodiments of present disclosure will be given in part in the following descriptions, become apparent in part from the following descriptions, or be learned from the practice of the embodiments of the present disclosure.

### BRIEF DESCRIPTION OF THE DRAWINGS

These and other aspects and advantages of embodiments of the present disclosure will become apparent and more readily appreciated from the following descriptions made with reference to the accompanying drawings, in which:
Fig. 1 is a flow chart of a password authentication method for an electronic device according to a first embodiment of the present disclosure;
Fig. 2 is a flow chart of a password authentication method for an electronic device according to a second embodiment of the present disclosure;
Fig. 3 is a flow chart of a password authentication method for an electronic device according to a third embodiment of the present disclosure;
Fig. 4 is a flow chart of a password authentication method for an electronic device according to a fourth embodiment of the present disclosure;
Fig. 5 is a flow chart of a password authentication method for an electronic device according to a fifth embodiment of the present disclosure;
Fig. 6 is a block diagram of an electronic device according to a sixth embodiment of the present disclosure.

### DETAILED DESCRIPTION

Reference will be made in detail to embodiments of the present disclosure, where the same or similar elements and the elements having same or similar functions are denoted by like reference numerals throughout the descriptions. The embodiments described herein with reference to drawings are explanatory, illustrative, and used to generally understand the present disclosure. The embodiments shall not be construed to limit the present disclosure.

In the description of the present disclosure, it should be understood that, terms such as "first" and "second" are used herein for purposes of description, and are not intended to represent or indicate relative importance or significance or to represent or indicate numbers or locations. In the description of the present disclosure, it should be understood that, unless specified or limited otherwise, terms such as "connected" and "coupled" should be understood broadly, and may be, for example, fixed connections, detachable connections, or integral connections; or may be mechanical or electrical connections; or may be direct connections or indirect connections via intervening structures, which can be understood by those skilled in the art according to specific situations. Moreover, in the description of the present invention, unless specified otherwise, "a plurality of" means two or more than two.

Any process or method described in a flow chart or described herein in other ways may be understood to include one or more modules, segments or portions of codes of executable instructions for achieving specific logical functions or steps in the process. Although the flow chart shows a specific order of execution, it is understood that the order of execution may differ from what is depicted. For example, the order of execution of two or more boxes may be scrambled relative to the order shown.

In the following, a password authentication method for an electronic device according to embodiments of the present disclosure will be described in detail with reference to drawings.

### First Embodiment

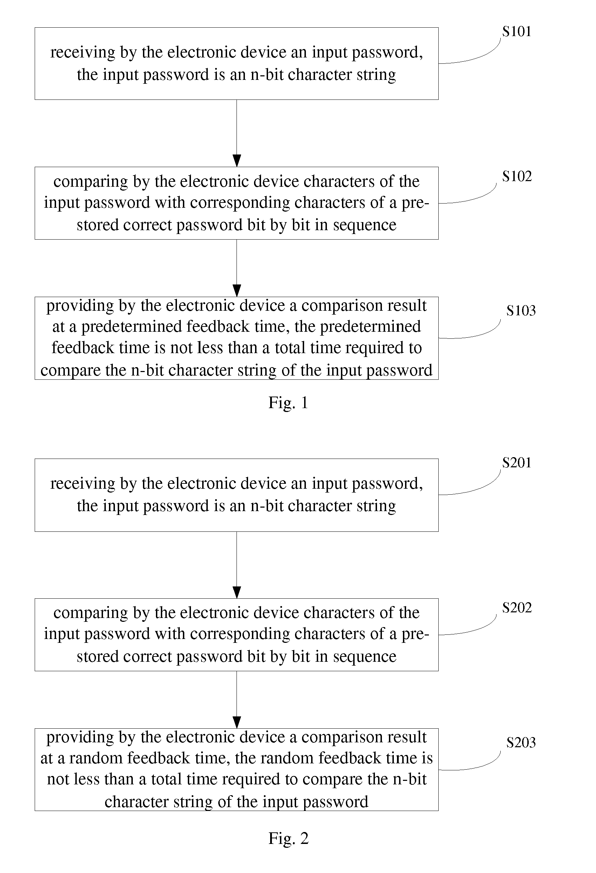

Fig. 1 is a flow chart of a password authentication method for an electronic device according to a first embodiment of the present disclosure.

With the password authentication method for an electronic device according to the first embodiment of the present disclosure, a comparison result of a password authentication is provided at a predetermined feedback time, whatever the comparison result is.

As shown in Fig. 1, the password authentication method for an electronic device according to the first embodiment of the present disclosure comprises following steps.

At step S101, an input password is received by the electronic device, in which the input password is an n-bit character string and n≥1.

For example, the input password which is an n-bit character string may be input by a user through keys on the electronic device. Or, the input password may be received via a wireless communication.

At step S102, characters of the input password are compared by the electronic device with corresponding characters of a pre-stored correct password bit by bit in sequence.

At step S103, a comparison result is provided at a predetermined feedback time, in which the predetermined feedback time is not less than a total time required to compare the n-bit character string of the input password.

For example, assuming that the pre-stored correct password is a 6-bit character string "123456" and a time required to authenticate each character of the input password is 0.1ms, that is, a total time required to authenticate all characters of the input password is 0.6ms, then the predetermined feedback time may be configured by the user as a time not less than 0.6ms, such that it is guaranteed that the input password is authenticated correctly. For example, the predetermined feedback time is configured as 0.6ms, the comparison result may be provided by the electronic device at 0.6ms, whatever the comparison result is. It should be understood that, the predetermined feedback time should not be too large so as to avoid wasting time and reducing efficiency.

In addition, a control for the feedback time may be realized by a delayed time processing or by a redundancy computing. For example, a time delayer may be provided in the electronic device, the comparison result of the password authentication is input into the time delayer and controlled by the time delayer to be output at the predetermined feedback time.

With the password authentication method for an electronic device according to embodiments of the present disclosure, a comparison result of a password authentication may be provided by the electronic device at a predetermined feedback time, whatever the comparison result is. In this way, an online criminal cannot obtain an entire correct password through many times of calculation according to a rule of feedback time, such that the security of the password of the electronic device is enhanced, thus enhancing the security of user accounts.

### Second Embodiment

Fig. 2 is a flow chart of a password authentication method for an electronic device according to a second embodiment of the present disclosure.

The password authentication method for an electronic device in the second embodiment is similar to that in the second embodiment, and the only difference is that with the password authentication method for an electronic device in the second embodiment, a comparison result is provided at a random feedback time rather than a predetermined feedback time, whatever the comparison result is.

As shown in Fig. 2, the password authentication method for an electronic device according to embodiments of the present disclosure comprises following steps.

At step S201, an input password is received by the electronic device, in which the input password is an n-bit character string and n≥1.

At step S202, characters of the input password are compared by the electronic device with corresponding characters of a pre-stored correct password bit by bit in sequence.

At step S203, a comparison result is provided at a random feedback time, in which the random feedback time is not less than a total time required to compare the n-bit character string of the input password.

Of course, in embodiments of the present disclosure, the random feedback time is not greater than a predetermined time so as to avoid wasting time and reducing efficiency.

For example, assuming that the pre-stored correct password is a 6-bit character string "123456" and a time required to authenticate each character of the input password bit by bit is 0.1ms, that is, a total time required to authenticate all characters of the input password is 0.6ms, and assuming that the predetermined time is 1ms, then if the input password is "123000", the random feedback time may be any time in a time interval [0.6ms, 1ms], such that it is guaranteed that the input password is authenticated correctly. Furthermore, a time of waiting for the comparison result may be limited, thus improving efficiency.

In addition, with respect for the control to the feedback time, it is possible to select a feedback time randomly in a predetermined time interval, so as to provide the comparison result at the selected feedback time.

With the password authentication method for an electronic device according to embodiments of the present disclosure, a comparison result of a password authentication may be provided by the electronic device at a random feedback time, whatever the comparison result is. In this way, an online criminal cannot obtain an entire correct password through many times of calculation according to a rule of feedback time, such that the security of the password of the electronic device is enhanced, thus enhancing the security of user accounts.

### Third Embodiment

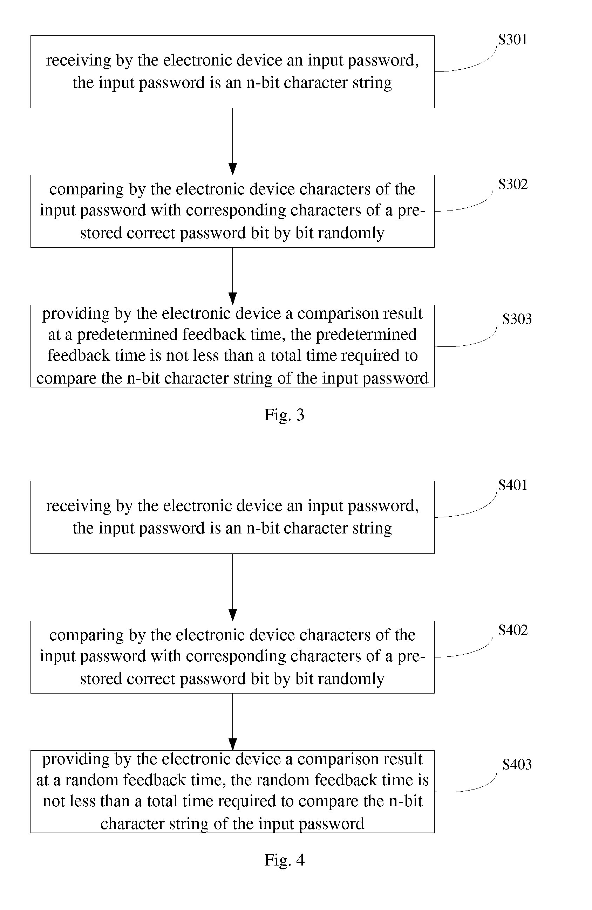

Fig. 3 is a flow chart of a password authentication method for an electronic device according to a third embodiment of the present disclosure.

With the password authentication method for an electronic device according to the third embodiment, the electronic device compares a character string of a received password randomly instead of orderly.

As shown in Fig. 3, the password authentication method for an electronic device according to embodiments of the present disclosure comprises following steps.

At step S301, an input password is received by the electronic device, in which the input password is an n-bit character string and n≥1.

At step S302, characters of the input password are compared by the electronic device with corresponding characters of a pre-stored correct password bit by bit randomly.

At step S303, a comparison result is provided at a predetermined feedback time, in which the predetermined feedback time is not less than a total time required to compare the n-bit character string of the input password.

Assuming that the pre-stored correct password is a 6-bit character string "123456" and a time required to authenticate each character of the input password is 0.1ms, that is, a time required to authenticate all characters of the input password is 0.6ms, then the predetermined feedback time may be configured by the user as a time not less than 0.6ms, such that it is guaranteed that the input password is authenticated correctly. The input password is authenticated by selecting a character from the input password randomly to compare, for example, the fourth character of the input password is compared firstly, and then the first character of the input password is compared, that is, a character to be compared may be selected randomly. For example, assuming that the predetermined feedback time is configured as 0.6ms, then the comparison result is provided by the electronic device at 0.6ms whatever the comparison result is. It should be understood that, the predetermined feedback time should not be too large so as to avoid wasting time and reducing efficiency.

With the password authentication method for an electronic device according to embodiments of the present disclosure, a comparison result of a password authentication may be provided by the electronic device at a predetermined feedback time, whatever the comparison result is. In this way, an online criminal cannot obtain an entire correct password through many times of calculation according to a rule of feedback time, such that the security of the password of the electronic device is enhanced, thus enhancing the security of user accounts.

### Fourth Embodiment

The password authentication method for an electronic device in the fourth embodiment is similar to that in the third embodiment, and the only difference is that with the password authentication method for an electronic device in the fourth embodiment, a comparison result is provided at a random feedback time rather than a predetermined feedback time, whatever the comparison result is.

As shown in Fig. 4, the password authentication method for an electronic device according to embodiments of the present disclosure comprises following steps.

At step S401, an input password is received by the electronic device, in which the input password is an n-bit character string and n≥1.

At step S402, characters of the input password are compared by the electronic device with corresponding characters of a pre-stored correct password bit by bit randomly.

At step S403, a comparison result is provided at a random feedback time, in which the random feedback time is not less than a time required to compare the n-bit character string of the input password.

For example, assuming that the pre-stored correct password is a 6-bit character string "123456" and a time required to authenticate each character of the input password randomly is 0.1ms, that is, a time required to authenticate all characters of the input password is 0.6ms, and assuming that a predetermined time is 1ms, then if the input password is "123000", the random feedback time may be any time in a time interval [0.6ms, 1ms], such that it is guaranteed that the input password is authenticated correctly. Furthermore, by limiting a time of waiting for the comparison result, an efficiency is improved.

With the password authentication method for an electronic device according to embodiments of the present disclosure, a comparison result of a password authentication may be provided by the electronic device at a random feedback time, whatever the comparison result is. In this way, an online criminal cannot obtain an entire correct password through many times of calculation according to a rule of feedback time, such that the security of the correct password of the electronic device is enhanced, thus enhancing the security of user accounts.

### Fifth Embodiment

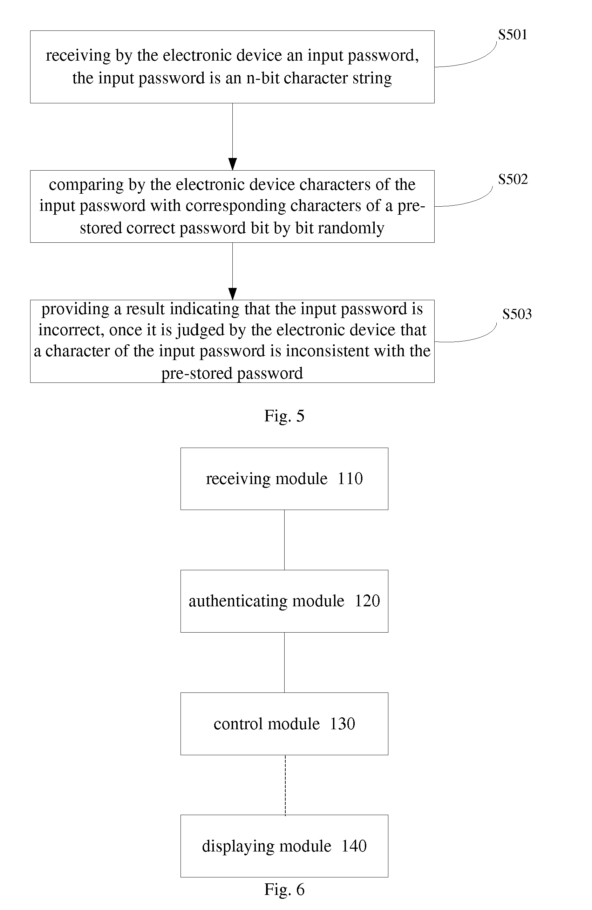

Fig. 5 is a flow chart of a password authentication method for an electronic device according to a fifth embodiment of the present disclosure.

With the password authentication method for an electronic device according to the fifth embodiment, the electronic device compares a character string of a received password randomly instead of orderly.

As shown in Fig. 5, the password authentication method for an electronic device according to embodiments of the present disclosure comprises following steps.

At step S501, an input password is received by the electronic device, in which the input password is an n-bit character string and n≥1.

At step S502, characters of the input password are compared by the electronic device with corresponding characters of a pre-stored correct password bit by bit randomly.

At step S503, a result indicating that the input password is incorrect is provided, once it is judged by the electronic device that a character of the input password is inconsistent with the pre-stored password.

For example, assuming that the pre-stored correct password is a 6-bit character string "123456" and a time required to authenticate each character of the input password is 0.1ms, if the input password is "123000" and a fourth character of the input password is compared firstly, then the result indicating the input password is incorrect is provided at 0.1ms. Therefore, if an online criminal tries to decipher the pre-stored correct password, he/she may determine that a first character of the input password is incorrect, so he/she may input a modified password after modifying the first character. However, the first character is correct in fact, such that a possibility that the criminal deciphers the pre-stored correct password according to a rule of feedback time is reduced significantly, thus improving the security of the pre-stored correct password.

With the password authentication method for an electronic device according to embodiments of the present disclosure, a character string of a received password is compared by the electronic device randomly instead of orderly. In this way, an online criminal cannot obtain a correct password through many times of calculation according to a rule of feedback time, such that the security of the password of the electronic device is enhanced, thus enhancing the security of user accounts.

In the following, an electronic device according to embodiments of the present disclosure will be described in detail with reference to drawings.

### Sixth Embodiment

Fig. 6 is a block diagram of an electronic device according to a sixth embodiment of the present disclosure.

As shown in Fig. 6, the electronic device according to embodiments of the present disclosure comprises a receiving module 110, an authenticating module 120 and a control module 130.

Specifically, the receiving module 110 is configured to receive an input password, in which the input password is an n-bit character string and n≥1.

The authenticating module 120 is configured to compare characters of the input password with corresponding characters of a pre-stored password bit by bit in sequence or randomly.

The control module 130 is configured to output a comparison result at a predetermined feedback time or a random feedback time after the comparison result is obtained by the authenticating module 120, in which each of the predetermined feedback time and the random feedback time is not less than a total time required to compare the n-bit character string of the input password.

Or, the control module 130 is configured to output a result indicating the input password is incorrect once it is judged that a character of the input password is inconsistent with the pre-stored password when characters of the input password are compared by the authenticating module 120 with corresponding characters of the pre-stored password bit by bit randomly.

In addition, the electronic device may further comprise a displaying module 140.

The displaying module 140 is configured to receive the comparison result output by the control module 130 and to display the comparison result; or
the displaying module 140 is configured to receive the result output by the control module 130 indicating the input password is incorrect and to display the result indicating the input password is incorrect.

Further, the control module 130 may output the comparison result at the predetermined feedback time by a delayed time processing or a redundancy computing. The control module 130 may also be configured to select a feedback time randomly as the random feedback time, and to output the comparison result at the random feedback time.

Of course, the predetermined feedback time should not be too large so as to avoid wasting time and reducing efficiency. The random feedback time should also not be greater than a predetermined time so as to avoid wasting time and reducing efficiency.

With the electronic device according to embodiments of the present disclosure, a comparison result of a password authentication may be provided by the electronic device at a predetermined feedback time or a random feedback time, whatever the comparison result is, or characters of a received password are authenticated by the electronic device randomly instead of orderly. In this way, an online criminal cannot obtain an entire correct password through many times of calculation according to a rule of feedback time, such that the security of the password of the electronic device is enhanced, thus enhancing the security of user accounts.

Although explanatory embodiments have been shown and described, it would be appreciated by those skilled in the art that the above embodiments cannot be construed to limit the present disclosure, and changes, alternatives, and modifications can be made in the embodiments without departing from spirit, principles and scope of the present disclosure.

## Claims

1. A password authentication method for an electronic device, comprising:
receiving by the electronic device an input password, wherein the input password is an n-bit character string and n≥1;
comparing by the electronic device characters of the input password with corresponding characters of a pre-stored correct password bit by bit in sequence or randomly; and
providing by the electronic device a comparison result at a predetermined feedback time or a random feedback time, wherein each of the predetermined feedback time and the random feedback time is not less than a total time required to compare the n-bit character string of the input password.

2. The method according to claim 1, wherein providing by the electronic device a comparison result at a predetermined feedback time comprises:
controlling the electronic device to provide the comparison result at the predetermined feedback time by a delayed time processing; or
controlling the electronic device to provide the comparison result at the predetermined feedback time by a redundancy computing.

3. The method according to claim 1, wherein providing by the electronic device the comparison result at a random feedback time comprises:
selecting a feedback time randomly as the random feedback time, and controlling the electronic device to provide the comparison result at the random feedback time.

4. The method according to claim 1 or 3, wherein the random feedback time is not greater than a predetermined time.

5. The method according to any of claims 1-3, wherein the electronic device is an electronic signature token or a smart card.

6. A password authentication method for an electronic device, comprising:
receiving by the electronic device an input password, wherein the input password is an n-bit character string and n≥1;
comparing by the electronic device characters of the input password with corresponding characters of a pre-stored correct password bit by bit randomly; and
providing a result indicating the input password is incorrect once it is judged by the electronic device that a character of the input password is inconsistent with the pre-stored correct password.

7. An electronic device, comprising:
a receiving module, configured to receive an input password, wherein the input password is an n-bit character string and n≥1;
an authenticating module, configured to compare characters of the input password with corresponding characters of a pre-stored correct password bit by bit in sequence or randomly; and
a control module, configured to output a comparison result at a predetermined feedback time or a random feedback time after the comparison result is obtained by the authenticating module, wherein each of the predetermined feedback time and the random feedback time is not less than a total time required to compare the n-bit character string of the input password.

8. The electronic device according to claim 7, wherein the control module is further configured to output the comparison result at the predetermined feedback time by a delayed time processing or a redundancy computing.

9. The electronic device according to claim 7, wherein the control module is configured to select a feedback time randomly as the random feedback time, and to output the comparison result at the random feedback time.

10. The electronic device according to claim 7 or 9, wherein the random feedback time is not greater than a predetermined time.

11. The electronic device according to any of claims 7-9, further comprising:
a displaying module, configured to receive the comparison result output by the control module and to display the comparison result.

12. The electronic device according to any of claims 7-9, wherein the electronic device is an electronic signature token or a smart card.

13. An electronic device, comprising:
a receiving module, configured to receive an input password, wherein the input password is an n-bit character string and n≥1;
an authenticating module, configured to compare characters of the input password with corresponding characters of a pre-stored correct password bit by bit randomly; and
a control module, configured to output a result indicating the input password is incorrect once it is judged that a character of the input password is inconsistent with the pre-stored correct password.

14. The electronic device according to claim 13, further comprising:
a displaying module, configured to receive the result output by the control module and to display the result.

15. The electronic device according to claim 13 or 14, wherein the electronic device is an electronic signature token or a smart card.
